Europäisches Patentamt

(19) European Patent Office

Office européen des brevets

(11) EP 0 738 963 A1

(12) EUROPEAN PATENT APPLICATION

(43) Date of publication:
23.10.1996 Bulletin 1996/43

(51) Int. Cl.⁶: G06F 9/44

(21) Application number: 95118546.1

(22) Date of filing: 24.11.1995

(84) Designated Contracting States:
DE FR GB

(30) Priority: 20.04.1995 JP 95526/95

(71) Applicant: FUJITSU LIMITED
Kawasaki-shi, Kanagawa 211 (JP)

(72) Inventors:
• Satoh, Ken
Sapporo-shi, Hokkaido, 063 (JP)

• Okamoto, Seishi,
c/o Fujitsu Limited
Kawasaki-shi, Kanagawa, 211 (JP)

(74) Representative: Schmidt-Evers, Jürgen, Dipl.-Ing.
et al
Patentanwälte Mitscherlich & Partner,
Sonnenstrasse 33
80331 München (DE)

(54) **Proposition probability determining method and apparatus, and probabilistic inference apparatus**

(57)     A number of proposition pairs are produced (in S1-1), and a probable proposition is selected from each of thus-produced proposition pairs (in S1-2). Each proposition is a combination of truth symbols ('1')/falsity symbols ('0') which are determined for predetermined events respectively. An inequality is set corresponding to a result of each selection (in S1-3). Each inequality thus being set includes a common variable vector. Then, the common variable vector is determined such that all inequalities thus set are fulfilled at the same time (in S1-4). Specifically, the simultaneous inequalities are solved. A number is determined (in S1-5), which number is the number of proposition pairs being produced. The number is determined according to a desired reliability of the common variable vector which is thus fixed.

FIG. 2

EP 0 738 963 A1

## Description

BACKGROUND OF THE INVENTION

1. Field of the Invention

The present invention relates to proposition probability determining method and apparatus and probabilistic inference apparatus, in particular, proposition probability determining method and apparatus for determining probabilities of propositions, the thus-determined probabilities being then used for performing probabilistic inference.

An *expert system* is a system for solving problems. For this purpose, in addition to various general data, knowledge including factual rules of *human specialists* in a particular field is compiled in a knowledge base which a computer can use, and then is stored. The expert system effectively uses the thus-stored knowledge data for solving problems.

The expert system performs an inference operation using the knowledge data in response to information being input by a user. The expert system then explains a conclusion of the inference operation to the user. In such a case, a user may not input information to the expert system, which information is sufficient for performing perfect inference. Therefore, when performing the inference operation, *probabilistic inference* is performed for compensating for such an insufficiency of input information. In order to perform the probabilistic inference, it is necessary to previously set probabilities of relevant propositions.

2. Description of Related Art

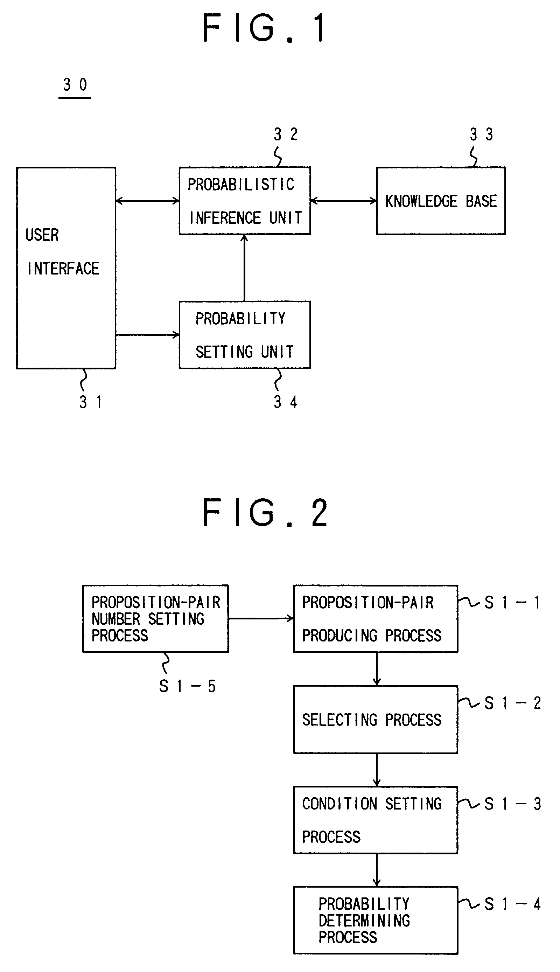

With reference to FIG.1, a probabilistic inference apparatus 30 which uses an expert system in a related art will now be described. In the apparatus 30, when information is input by a user to the apparatus 30 via a user interface 31, the input information is used by a probabilistic inference unit 32 which thus performs a probabilistic inference operation.

The probabilistic inference unit 32 refers to a knowledge base 33 according to the input information. Thus, the probabilistic inference unit 32 extracts relevant propositions from the knowledge base 33, and performs the probabilistic inference operation using probabilities of the propositions which are previously set in a probability setting unit 34. Thus, a conclusion is drawn.

A diagnosis system will now be considered as an example of the expert system. For drawing a conclusion, it is necessary to previously prepare numerical probabilities of relevant propositions. The numerical probabilities of relevant propositions in this example may include:

'each possibility of having bronchitis or asthma is **20%** when coughing';
'a possibility of having bronchitis is **80%** when coughing and also having a temperature'; and
'a possibility of having enteritis is **30%** when having a stomachache while having neither a temperature nor coughing'.

In order to improve a performance of such probabilistic inference, it has been necessary to previously set various numerical probabilities of relevant propositions in detail. Each proposition includes a combination of *events* such as 'having bronchitis', 'having asthma', 'having enteritis', 'coughing', 'having a temperature', 'having a stomachache', and so forth. A work of setting numeric probabilities of such propositions is very difficult for a user, in particular, for a general user who has no substantial knowledge of an *inference* operation of the expert system.

SUMMARY OF THE INVENTION

An object of the present invention is to provide proposition probability determining method and apparatus and a probabilistic inference apparatus, in which probabilities of propositions can be set qualitatively and thus the setting work is easy even for a general user.

A proposition probability determining method, according to the present invention, comprises steps of:

a) producing a number of proposition pairs;
b) selecting a probable proposition from each of thus-produced proposition pairs;
c) setting a condition corresponding to a result of each selection performed in the step b), each condition thus being set including a common variable factor; and
d) fixing the common variable factor such that all conditions set in the step c) are fulfilled at the same time.

In the method, a user is not requested to specify a numerical probability, but is requested only to select a probable one of each proposition pair. Thus, a preparation work for the probabilistic inference is easy.

It is preferable that a step of e) is performed, while step e) is determining a number, which number is the number of proposition pairs produced in step a),

the number being determined according to a desired reliability of the common variable factor which is fixed in the step d).

Thereby, it is possible for a user to arbitrary determine the number of proposition pairs being produced and the selection being performed on each of them. Thus, the user can determine, in relation to the number of proposition pairs to be processed, a reliability of a conclusion of probabilistic inference to be performed using the variable factor. If the user strongly desires a high reliability for a conclusion but does not want to reduce the number of proposition pairs to be processed, the number may be appropriately increased. If the user does not need a high reliability for a conclusion but strongly wishes to reduce the number of proposition pairs to be processed, the number may be appropriately reduced. Thus, the probabilistic inference is performed efficiently by thus determining the optimum number of proposition pairs to be processed.

In the step a), each proposition of each proposition pair being produced may be represented by a vector 'x' having elements of truth symbols '1'/falsity symbols '0', which are determined for the predetermined events respectively, and each proposition pair is represented by $(x_{k1}, x_{k2})$. Then, if the step b) selects the vector $x_{k1}$ as the probable proposition, the step c) may set an inequality

$$w \cdot x_{k1} \leq w \cdot x_{k2},$$

and if the step b) selects the vector $x_{k2}$ as the probable proposition, the step c) may set an inequality

$$w \cdot x_{k2} \leq w \cdot x_{k1} + 1,$$

where '$\cdot$' represents an inner-product operation and 'w' is a variable vector.

Said step d) may obtain the variable vector w such that all inequalities set in the step c) for all the proposition pairs are fulfilled, thus-obtained variable vector w being then used for determining a probability of a proposition of a given combination of the predetermined events.

Further, the step c) may set the number equal to or more than

$$\max[\frac{4}{e}\log_2 \frac{2}{\delta}, \frac{8(n+1)}{e}\log_2 \frac{13}{e}],$$

where a number of the predetermined events is 'n', a given error ratio is 'e' and a probability that an actual error ratio is equal to or more than 'e' is '$\delta$'.

A probabilistic inference apparatus according to the present invention, comprises:

means for inputting truth/falsity for each event of a predetermined number of events, a proposition being represented by a combination of thus-input truth/falsity determined for the predetermined number of events respectively; and

means for performing a probabilistic inference operation so as to obtain a probability of the proposition, using a factor previously set for each event of the predetermined number of events.

In the apparatus, it is necessary to prepare only a number of factors (particular weights of the variable vector 'w') predetermined for predetermined number of events. Thus, the contents to be prepared are very simple. The factors or particular weights of the variable vector 'w' may be obtained by the above-described proposition probability determining method according to the present invention.

Then, an inner-product operation is performed on the vector 'w' and a vector 'x' corresponding to a particular proposition of a given combination of truth ('1')/falsity ('0') symbols which are determined for the predetermined number of events respectively. Thus, a probability of the particular proposition is calculated.

Other objects and further features of the present invention will become more apparent from the following detailed description when read in conjunction with the accompanying drawings.

BRIEF DESCRIPTION OF THE DRAWINGS

FIG.1 shows a block diagram of a probabilistic inference apparatus in a related art;
FIG.2 shows a block diagram of a proposition probability determining apparatus in a first embodiment of the present invention;
FIG.3 shows a block diagram of an expert-system apparatus in a second embodiment of the present invention;
FIG.4 shows an inference unit in the apparatus shown in FIG.3;
FIG.5 shows a flowchart of an operation of the apparatus shown in FIG.3; and
FIG.6 shows a flowchart of an operation of a probability setting process in the operation shown in FIG.5.

DESCRIPTION OF PREFERRED EMBODIMENTS

With reference to FIG.2, an operation of a proposition probability determining apparatus in a first embodiment of the present invention will now be described. The apparatus performs a proposition-pair producing process S1-1 and thus produces proposition pairs. Each proposition is a combination of truth/falsity of predetermined events. The apparatus then performs a selecting process S1-2 and thus selects one of each proposition pair produced in the proposition-pair producing process S1-1, the proposition selected from the proposition pair having a higher probability than that of the other.

The apparatus performs a condition setting process S1-3 and thus sets a condition, for each proposition pair, corresponding to relevant proposition selection performed in the selecting process S1-2. Each condition includes variable factors for the predetermined events respectively. The apparatus performs a probability determining process S1-4 and thus fixes all the variable factors such that all conditions set in the condition setting process S1-3 are fulfilled.

In the use of this apparatus, a user is requested only to previously select, in the selecting process S1-2, a probable one from each proposition pair produced in the proposition-pair producing process S1-1. Then, a condition corresponding to this selection is set for each proposition pair in the condition setting process S1-3. Using thus-set conditions, each of the variable factors included in each condition for the predetermined events is fixed in the probability determining process S1-4. By using the thus-fixed variable factors, probabilistic inference can be performed. Thus, a probability is derived for a proposition of a particular combination of truth/falsity symbols for the predetermined events. Thus, the user is not required to previously set numerical probabilities for some propositions. Instead, the user is required to only previously select a probable one from between each of some proposition pairs as mentioned above.

The apparatus may further perform a proposition-pair number setting process S1-5 and thus set a number of the proposition pairs, which are produced in the proposition-pair producing process S1-1, according to desired reliability of probabilities which are to be determined by the probability setting process S1-4. As a result, it is possible to determine, according to the desired reliability, the minimum number of proposition pairs to be produced. As a result, it is possible to effectively reduce a number of proposition pairs and thus reduce a number of times a user is required to make a selection in the selecting process.

Further, it is preferable that each proposition is expressed by a vector $x_1$ or $x_2$ having a combination of truth and falsity symbols, each symbol representing either truth ('1') or falsity ('0') of a relevant event. Thus, each vector includes a series of truth/falsity symbols for relevant events. Thus, each proposition pair is represented by such vectors, $\langle x_1, x_2 \rangle$.

In this case, when in the selecting process S1-2 a proposition of vector $x_1$ is selected as having a higher probability than that of a proposition of vector $x_2$, an inequality:

$$w \bullet x_1 \leq w \bullet x_2$$

is set, where the symbol 'w' represents a variable vector and '$\bullet$' represents an operation of an inner product of two vectors, hereinafter. This inequality is a condition corresponding to a selected matter that the proposition of vector $x_1$ has a higher probability than that of the proposition of vector $x_2$. When in the selecting process S1-2 the proposition of vector $x_2$ is selected as having a higher probability than that of the proposition of vector $x_1$, an inequality:

$$w \bullet x_2 \leq w \bullet x_1 + 1$$

is set. This inequality is a condition corresponding to a selected matter that the proposition of vector $x_2$ has a higher probability than that of the proposition of vector $x_1$.

The variable w includes elements for the above-mentioned predetermined events of each proposition respectively.

Further, the probability determining process S1-4 fixes all elements of the variable vector w such that all conditions represented by thus-set inequalities be fulfilled. That is, simultaneous inequalities consisting of the thus-set inequalities are solved. Then, a probability is derived for a proposition of a given combination of truth/falsity symbols for the predetermined events, as a result of performing an inner-product operation on a proposition vector of the given combination of truth/falsity symbols and the thus-fixed elements of the variable vector w.

Furthermore, it is also preferable that when a number of events of a relevant proposition pair is 'n', an error ratio between the vector w to be fixed as described above and a true vector $w^*$ thereof is 'e' and a probability that an actual error is equal to or more than the error ratio e is $\delta$, the proposition-pair number setting process S1-5 sets the number of proposition pairs equal to or more than:

$$\max[\frac{4}{e}\log_2\frac{2}{\delta}, \frac{8(n+1)}{e}\log_2\frac{13}{e}].$$

Thereby, it is possible to obtain a reliability, for a probability as a conclusion of the inference, represented by the probability $\delta$.

It is also possible that an inference performing process is further performed and thus, according to the variable factors fixed by the probability determining process S1-4, probabilistic inference is performed.

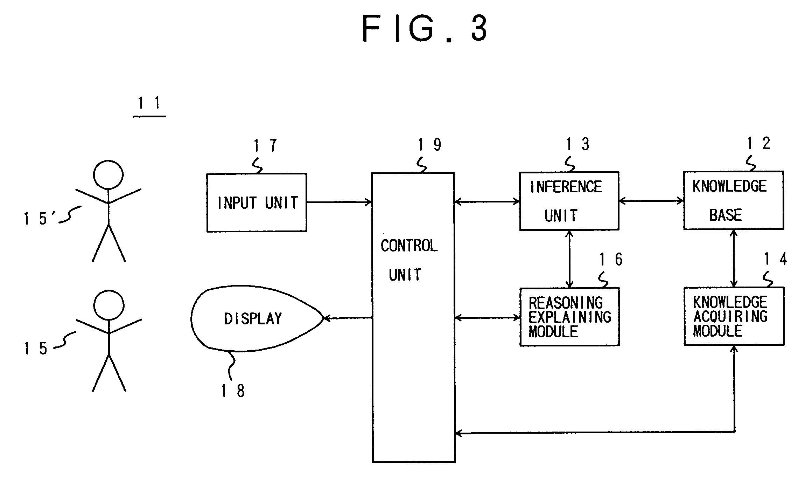

An expert-system apparatus 11 in a second embodiment of the present invention will now be described with reference to FIG.3. The apparatus 11 uses the expert system for realizing knowledge of human specialists in a particular field on a computer. The apparatus 11 is embodied in the computer. As the computer, an appropriate one is selected, depending on particular conditions such as a data amount to be processed, from among a personal computer, a minicomputer, a work station, a large-scale computer, and so forth. The computer is used as a *tool* for the expert system.

A knowledge base 12 integrally manages the knowledge of human specialists which is represented by a form of facts (events), rules and so forth. An inference unit 13 uses the knowledge of human specialists and thus perform an inference operation. A knowledge acquiring module 14 acquires knowledge from the human specialists and thus supports a work of constructing the knowledge base 12. A reasoning explaining module 16, in response to a request given by a user 15, explains a reason, in use of which a conclusion is derived through the inference unit 13. An input unit 17 receives input from the user 15 and a display 18 shows relevant information to the user 15. A control unit 19 controls an overall operation of the apparatus 11.

A case will now be assumed in which the expert-system apparatus 11 realizes the expert system determining the name of a disease according to given information of disease symptoms. In this case, the knowledge base 12 has knowledge such as:

'When a patient is coughing, a possibility that the patient has bronchitis or asthma is high';

'When a patient is coughing and also has a temperature, a possibility that the patient has bronchitis is high'; and

'When a patient has a stomachache while having neither a temperature nor coughing there is a possibility that the patient has enteritis.

The inference unit 13, according to information input by the user 15 indicating disease symptoms such as 'a patient is coughing' and 'a patient has a temperature', and so forth, infers a name of the disease, such as 'there is a possibility that the patient has bronchitis'.

In the expert system realizing knowledge of human specialists in a particular field, it is very unlikely that complete information is previously input as the knowledge of human specialists. In fact, the above-mentioned knowledge that:

'When a patient is coughing, **a possibility** that the patient has bronchitis or asthma **is high**';

'When a patient is coughing and also has a temperature, **a possibility** that the patient has bronchitis **is high**'; and

'When a patient has a stomachache while neither a temperature nor coughing, **there is a possibility** that the patient has enteritis, is not complete information because the knowledge includes vague expressions such as 'a possibility is high' and 'there is a possibility'. Accordingly, the inference unit 13 performs *probabilistic inference* and thus derives a probability of a given proposition using probabilities of predetermined propositions. For this purpose, means for previously setting qualitative probabilities of the predetermined propositions is provided.

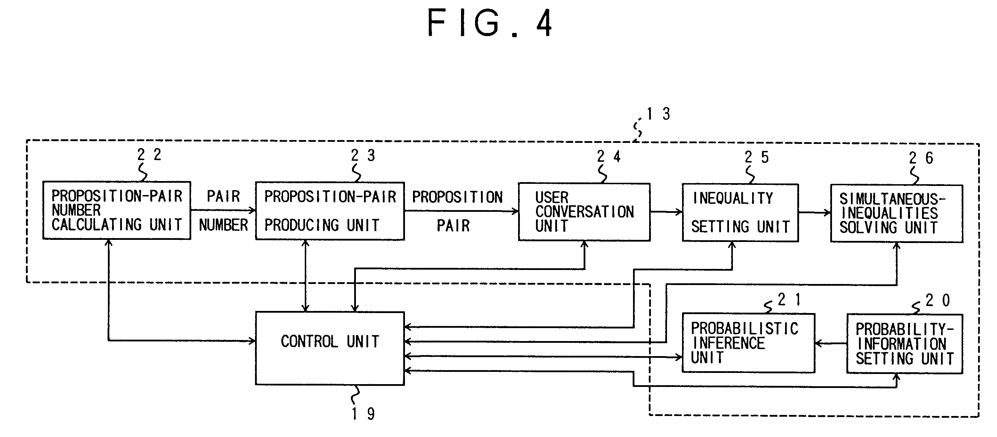

With reference to FIG.4, the inference unit 13 will now be described in detail. The inference unit 13 includes a probability setting unit 20, a probabilistic inference unit 21, a proposition-pair number calculating unit 22, a proposition-pair producing unit 23, a user conversation unit 24, an inequality setting unit 25, and a simultaneous-inequalities solving unit 26.

Probability information to be used for the probabilistic inference is set in the probability setting unit 20. The probabilistic inference unit 21 performs the probabilistic inference using the probability information set in the probability setting unit 20. The proposition-pair number calculating unit 22 calculates a number of proposition pairs. Each proposition is a combination of truth/falsity symbols for predetermined events, which the user 15 should input, as described above. The proposition-pair producing unit 23 produces the thus-calculated number of proposition pairs.

The user conversation unit 24 displays the thus-produced propositions to the user 15 on the display 18 via the control unit 19. The user 15 then selects a probable one from thus-displayed each proposition pair. The user conversation unit 24 then receives information indicating this selection from the user 15. The inequality setting unit 25 sets an inequality corresponding to information indicating each selection received through the user conversation unit 24. The inequality corresponding to the information indicating each selection will be described later. The inequality setting unit 25 thus sets a number of inequalities, which number is equal to the number of proposition pairs produced by the proposition producing unit 23. The simultaneous-inequalities solving unit 26 solves simultaneous inequalities including the thus-set number of inequalities. The simultaneous-inequalities solving unit 26 then sets resulting solutions in the probability setting unit 20 as the above-mentioned probability information.

The proposition-pair number calculating unit 22 receives information of the error ratio 'e', the probability 'δ' (certainty factor) that an actual error is equal or more than the error ratio e, and a number 'n' of the above-mentioned events from the user 15 via the input unit 17 and control unit 19. Then, the proposition-pair number calculating unit 22 calculates:

$$\max[\frac{4}{e}\log_2\frac{2}{\delta}, \frac{8(n+1)}{e}\log_2\frac{13}{e}].$$

The proposition-pair producing unit 23, in response to receiving information of the thus-calculated number from the proposition-pair number calculating unit 22, produces a number of proposition pairs, this number being equal to the number received from the proposition-pair number calculated unit 23. A proposition is produced as a result of combining truth/falsity symbols ('1'/'0') for the predetermined events. Then, for example, by inverting some of the truth/falsity symbols of this proposition, another proposition is produced. Thus, a proposition pair is produced.

For example, an event that 'a patient is coughing' is referred to as C, an event that 'a patient has a temperature' is referred to as F, an event that 'a patient has bronchitis' is referred to as K and an event that 'a patient has asthma' is referred to as Z. For example, a vector (C, F, K, Z) corresponding to a proposition that 'a patient is coughing and has a temperature, and has bronchitis' is (1, 1, 1, 0). A vector (C, F, K, Z) corresponding to a proposition that 'a patient is coughing and has a temperature, and has asthma' is (1, 1, 0, 1). Then, a proposition pair or vector pair $\langle(1, 1, 1, 0), (1, 1, 0, 1)\rangle$ is obtained.

Each proposition pair thus produced by the proposition-pair producing unit 23 is displayed to the user 15 on the display 18 through the user conversation unit 24. The user 15 then responds to this display and thus specifies which proposition of the thus-displayed proposition pair is probable.

The inequality setting unit 25 sets an inequality for a k-th proposition pair of vector pair $\langle x_{k1}, x_{k2}\rangle$ thus being displayed. When the user 15 replies that the proposition or vector $x_{k1}$ is more probable than $x_{k2}$, the inequality

$$w \cdot x_{k1} \leqq w \cdot x_{k2}$$

is set, where 'w' represents the variable vector. When the user 15 replies that the vector $x_{k2}$ is more probable than $x_{k1}$, the inequality

$$w \cdot x_{k2} \leqq w \cdot x_{k1} + 1$$

is set.

In the above-mentioned example, when the user replies that the proposition that 'a patient is coughing and has a temperature, and has bronchitis' is more probable than the proposition that 'a patient is coughing and has a temperature, and has asthma', the inequality

$$w \cdot (1, 1, 1, 0) \leqq w \cdot (1, 1, 0, 1)$$

is set. It is assumed that:

$$w = (W_C, W_F, W_K, W_Z).$$

As a result, the above inequality is expressed by

$$W_C {}^*1 + W_F {}^*1 + W_K {}^*1 + W_Z {}^*0 \leqq W_C {}^*1 + W_F {}^*1 + W_K {}^*0 + W_Z {}^*1.$$

Inequalities thus set for all the proposition pairs form simultaneous inequalities. The simultaneous-inequalities solving unit 26 solves the simultaneous inequalities and thus fixes the variable vector w. That is, a particular value is derived for each of the four elements $W_C$, $W_F$, $W_K$ and $W_Z$. Such a calculation can be performed using a well-known linear programming technique. Thus, the variable vector w including the four elements $W_C$, $W_F$, $W_K$ and $W_Z$ is fixed.

When it is required to perform the probabilistic inference using incomplete information concerning the predetermined events, the probabilistic inference unit 21 produces propositions of all possible combinations of truth/falsity symbols for the predetermined events. Then, an inner product $w \cdot x$ is calculated for each of all the thus-produced propositions using the above-obtained particular values of the four elements of the variable vector w. Then, the probabilistic inference unit 21 determines, as a conclusion of the probabilistic inference, a proposition having the minimum product, from among all the propositions, as the optimum proposition.

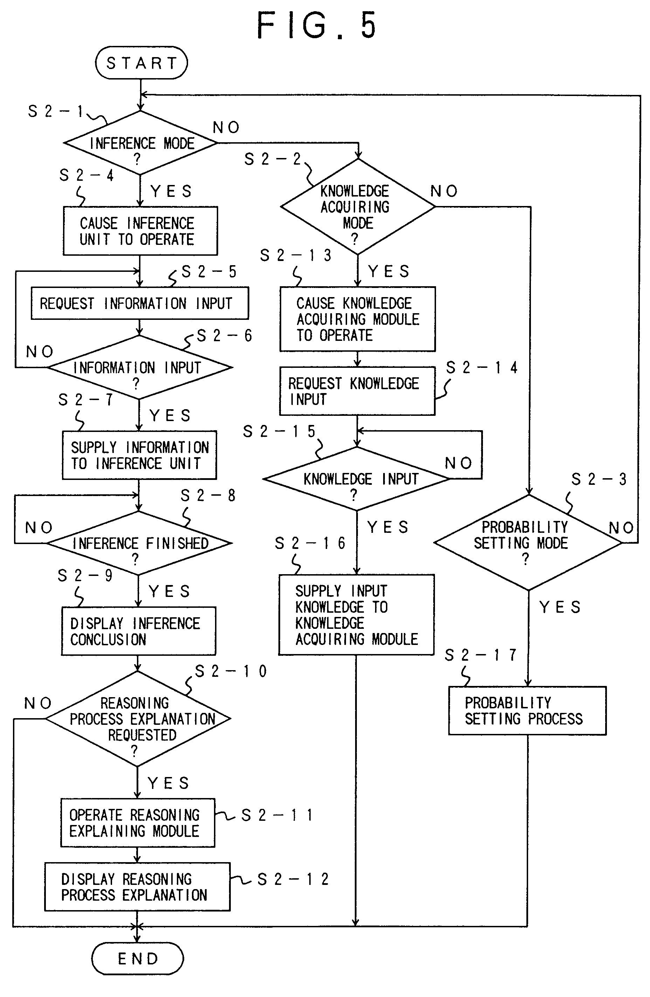

With reference to FIG.5, an operation of the control unit 19 of the expert-system apparatus in the second embodiment of the present invention will now be described. The user 15 sets an operation mode by manipulating the input unit 17 in steps S2-1, S2-2 and S2-3 (the term 'step' will be omitted, hereinafter). Operation modes include an inference mode, a knowledge acquiring mode and a probability setting mode. In the inference mode, the inference unit 13 is started and an inference operation is performed using knowledge of the knowledge base 12. In the knowledge acquiring mode, knowledge is acquired for storing it in the knowledge base 12 or updating contents of the knowledge base 12. In the probability setting mode, the probability information is set for the use in the probabilistic inference performed by the inference unit 13.

The inference mode will now be described. When the inference mode is selected in S2-1, the control unit 19 causes the inference unit 13 to start in S2-4. The inference unit 13 thus requests, on the display 18, the user 15 to give relevant information in S2-5. In response to the request, the user 15 manipulates the input unit 17 and thus gives the relevant information. The thus-given relevant information is supplied to the inference unit 13 in S2-6, S2-7. After an inference operation using the thus-supplied relevant information has been finished by the inference unit 13, the control unit 19 shows a conclusion of the inference operation on the display 18 in S2-8, S2-9.

The user may request the expert-system apparatus 11 via the input unit 17 to explain a reasoning process, through which the inference conclusion has been derived by the inference unit 13. If such a request is given, the control unit 19 causes the reasoning explaining module 16 to operate and displays on the display 18 the reasoning process in S2-10, S2-11, S2-12.

The knowledge acquiring mode will now be described. When the knowledge acquiring mode is selected in S2-2, the control unit 19 causes the knowledge acquiring module 14 to operate and requests on the display 18 the user 15 to input knowledge in S2-13, S2-14. When the user 15 inputs knowledge through the input unit 17 in S2-15, the thus-input knowledge is supplied to the knowledge acquiring module 14 in S2-16. Thus, this operation is finished.

The probability setting mode will now be described. When the probability setting mode is selected in S2-3, a probability setting process is performed and thus the probability information derived from input qualitative probabilities is set. For this purpose, the user is not required to input numeric probabilities such as '34%', '47%', and so forth, but is required only to input the qualitative probabilities. As a result, it is easy for the user to input information necessary for the expert-system apparatus to set the probability information.

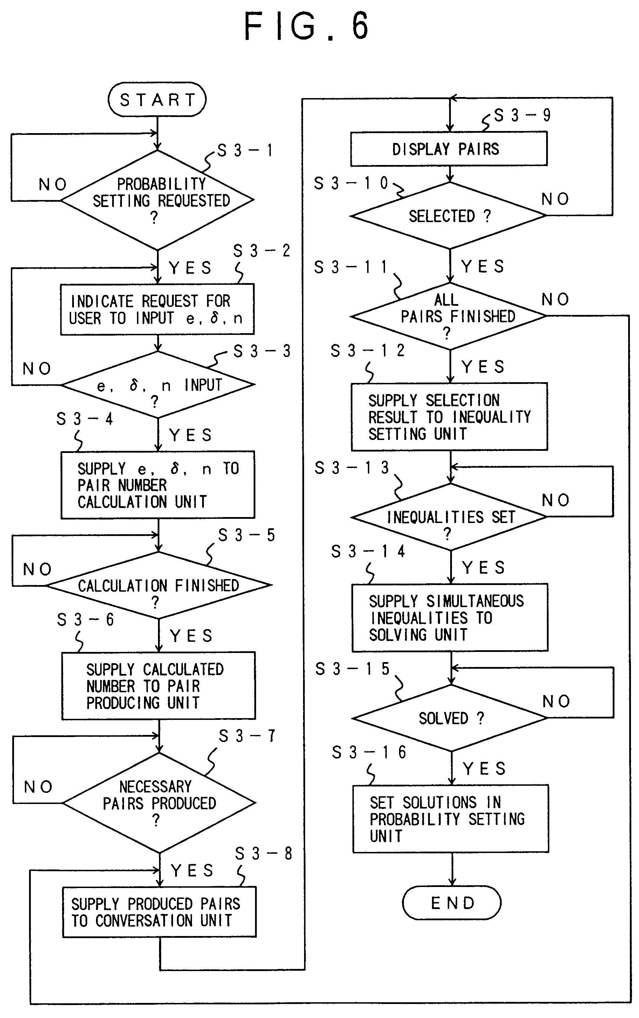

The probability setting process will now be described with reference to FIG.6. The user 15 manipulates the input unit 17 and thus selects the probability setting mode. Then, the proposition-pair number calculating unit 22 in the inference unit 13 operates and thus requests the user 15 to give the error ratio 'e' (which will be described later) between the vector 'w' the true vector 'w*' thereof, the certainty factor '$\delta$' (which will also be described later) of the set probability and a number 'n' of the predetermined events, in S3-1, S3-2. When the user 15 inputs e, $\delta$ and n, the thus input information is supplied to the proposition-pair number calculating unit 22 in S3-3, S3-4.

After the proposition-pair number calculating unit 22 has finished calculating the number of proposition pairs in S3-5, the control unit 19 causes the proposition-pair producing unit 23 to operate and thus produce a number of proposition pairs using information concerning the predetermined events in S3-6, the number being equal to the number calculated by the proposition-pair calculating unit 22. Then, the control unit 19 causes the user conversation unit 24 to operates, supplies the thus-produced number of proposition pairs to the user conversation unit 24, and displays on the display 18 the proposition pairs, in S3-7, S3-8 and S3-9. The user 15 selects a probable one between thus-displayed each proposition pair. Then, the control unit 19 causes the inequality setting unit 25 to operate and selection results are supplied to the inequality setting unit 25, in S3-10, S3-11, S3-12.

When the inequality setting unit 25 sets inequalities according to the selection results in S3-13, the control unit 19 causes the simultaneous-inequalities solving unit 26 to operate and supplies the thus-set inequalities to the solving unit 26 in S3-14. When the solving unit 26 solves simultaneous inequalities of the thus-supplied inequalities and thus obtains solutions in S3-15, the control unit 19 causes the probability setting unit 20 to operate which thus sets the thus-obtained solutions as the probability information in S3-16.

How to determine a probability of a given proposition in the probabilistic inference performed by the inference unit 13 will now be described.

A proposition, which is a combination of predetermined events, is expressed by a vector, having elements for the predetermined events respectively, in an n-dimensional Euclid space. A *probability distance* for a probability of the proposition is defined using distances along particular dimensions from the origin in the n-dimensional Euclid space, each distance along a relevant dimension being accompanied by a weight. According to the probability-distance definition, in general, it is considered that, as the defined probability distance is **smaller**, the probability of the proposition is **higher**.

As mentioned above, for example, the event that 'a patient is coughing' is referred to as C, the event that 'a patient has a temperature' is referred to as F, the event that 'a patient has bronchitis' is referred to as K and the event that 'a patient has asthma' is referred to as Z. For example, the vector (C, F, K, Z) corresponding to the proposition that 'a patient is coughing and has a temperature, and has bronchitis' is (1, 1, 1, 0). The vector (C, F, K, Z) corresponding to the proposition that 'a patient is coughing and has a temperature, and has asthma' is (1, 1, 0, 1).

The above-defined probability distance is obtained as a result of performing an inner-product operation on the variable vector 'w' and each proposition in a form of the vector 'x', (C, F, K, Z). The variable vector 'w' has elements corresponding to weights, each of which is provided for a respective one of the predetermined events. According to the definition, when a weight is **large**, a relevant event is **less** probable. In the above example, a weight $W_C$ for the event 'a patient is coughing' is assumed to be 0.3, a weight $W_F$ for the event 'a patient has a temperature' is assumed to be 0.5, a weight $W_K$ for the event 'a patient has bronchitis' is assumed to be 0.2 and a weight $W_Z$ for the event 'a patient has asthma' is assumed to be 0.1. As a result, the probability distance for the proposition that 'a patient is coughing, has a temperature and has bronchitis' is:

$$(W_C, W_F, W_K, W_Z) \cdot (C, F, K, Z) = W_C{}^*C + W_F{}^*F + W_K{}^*K + W_Z{}^*Z$$
$$= 0.3^*1 + 0.5^*1 + 0.2^*1 + 0.1^*0$$
$$= 1.0.$$

Similarly, the probability distance for the proposition that 'a patient is coughing, has a temperature and has asthma' is:

$$= W_C{}^*C + W_F{}^*F + W_K{}^*K + W_Z{}^*Z$$
$$= 0.3^*1 + 0.5^*1 + 0.2^*0 + 0.1^*1$$
$$= 0.9.$$

Thus, the probability distance for the proposition that 'a patient is coughing, has a temperature and has bronchitis' is larger than that for the proposition that 'a patient is coughing, has a temperature and has asthma'. Accordingly, the proposition that 'a patient is coughing, has a temperature and has bronchitis' is **less** probable than the proposition that 'a patient is coughing, has a temperature and has asthma'.

The above-mentioned true vector $w^*$ is assumed as being a true vector in $[0, \infty)^n$ in the n-th Euclid space. Each proposition, which is a combination of predetermined events, is represented by a vector having elements of the truth/falsity symbols '1'/'0' as mentioned above. An inequality for a $k$-th proposition pair of a vector pair $\langle x_{k1}, x_{k2} \rangle$ is thus displayed. When the user 15 replies that the proposition or vector $x_{k1}$ is more probable than $x_{k2}$, the inequality

$$w \cdot x_{k1} \leqq w \cdot x_{k2} \tag{1}$$

is set. When the user 15 replies that the vector $x_{k2}$ is probable than $x_{k1}$, the inequality

$$w \cdot x_{k2} \leqq w \cdot x_{k1} + 1 \tag{2}$$

is set.

Simultaneous inequalities of the above inequalities (1) and (2) are solved and a solution is assumed to be 'w'. An error 'diff(w, $w^*$)' of a size relationship between two propositions of a proposition pair $\langle x_i, x_j \rangle$ according to a difference between w and $w^*$ is defined by:

$$\{\langle x_i, x_j \rangle | (w \cdot x_i < w \cdot x_j \wedge w^* \cdot x_i > w^* \cdot x_j) \vee (w \cdot x_i > w \cdot x_j \wedge w^* \cdot x_i < w^* \cdot x_j)\}$$

Occurrence of this error diff(w, $w^*$) indicates a situation that an order, between probabilities of two propositions of vectors $x_i$ and $x_j$, obtained as a result of the vector w being used, is reverse of an order, between probabilities of two propositions of vectors $x_i$ and $x_j$, obtained as a result of the vector $w^*$.

In the above example, it is assumed that the true vector $w^*$ is:

$$(W_C, W_F, W_K, W_Z) = (0.3, 0.5, 0.2, 0.1),$$

and the vector w obtained as a result of solving the above-mentioned simultaneous inequalities is:

$$(W_C, W_F, W_K, W_Z) = (0.3, 0.5, 0.2, 0.3).$$

In this case, it is assumed that the above true vector $w^*$ is used for obtaining the probability distances of the above-mentioned proposition pair of vector pair $\langle (1, 1, 1, 0), (1, 1, 0, 1) \rangle$. As a result, as in the above-mentioned example, the probability distance for the proposition that 'a patient is coughing, has a temperature and has bronchitis' is larger than that 'a patient is coughing, has a temperature and has asthma'. Accordingly, the proposition that 'a patient is coughing, has a temperature and has bronchitis' is **less** probable than the proposition that 'a patient is coughing, has a temperature and has asthma'. In contrast to this, if the vector w is used for the same purpose, the order of the probabilities of the two propositions is reversed. Such a situation corresponds to the occurrence of the error 'diff(w, $w^*$)'.

The simultaneous inequalities of the above inequalities (1) and (2) result in a hyperplane leaning case in which the space is divided. Accordingly, a probability distribution P is assumed for grid points (points at which the elements of each vector are either '1' or '0') on an n-th Euclid space $[0\text{-}1]^n$. A probability that a proposition pair is produced is therefore defined as $P^2$.

Then, an error ratio $P^2$ (diff(w, w*)) of the above-mentioned error 'diff(w, w*)' of size relationship between the two propositions of the proposition pair $\langle x_i, x_j \rangle$ according to difference between w and w* is considered. In order to prevent a probability that the error ratio $P^2$ (diff(w, w*)) exceeds 'e' from exceeding $\delta$, that is,

$$\text{Prob}(P^2 \ (\text{diff}(w, w^*)) \geq e) < \delta,$$

it is necessary to set a number 'n' of the inequalities of the simultaneous inequalities. This number 'n' is equal to or more than

$$\max[\frac{4}{e}\log_2\frac{2}{\delta}, \ \frac{8(n+1)}{e}\log_2\frac{13}{e}].$$

This is according to [Blumer89], Blumer, A., Ehrenfeucht, A., Haussler, D., and Warmuth, M. K., "Learnability and the Vapnik-Chervonenkis Dimension", *JACM*, **36**, pp. 929-965 (1989).

In the second embodiment, a user is requested only to previously give a selection between each proposition pair and then, using thus-given selection information, the apparatus automatically learns probabilities of propositions based on thus-given qualitative probabilities, and thus calculates a probability of a desired particular proposition. Thus, it is easy for the user to previously give probability information to the apparatus.

Further, through theoretical reason described above, a number of proposition pairs necessary for the learning based on the qualitative probabilities does not exceed a number on the order of a number corresponding to a polynomial expression of a number of the predetermined events. In fact, in the above-mentioned expression

$$\max[\frac{4}{e}\log_2\frac{2}{\delta}, \ \frac{8(n+1)}{e}\log_2\frac{13}{e}],$$

the second term, between the brackets,

$$\frac{8(n+1)}{e}\log_2\frac{13}{e}$$

includes the number 'n' of the predetermined events, and thus does not exceed a number on the order of a number corresponding to a polynomial expression of the number of the predetermined events. Further, the first term, between the brackets,

$$\frac{4}{e}\log_2\frac{2}{\delta}$$

does not include the number 'n' of the predetermined events. However, the number 'n' is a positive integer and thus

$$\frac{4}{e}\log_2\frac{2}{\delta} \cdot n \geq \frac{4}{e}\log_2\frac{2}{\delta}.$$

Accordingly, the first term also does not exceed a number on the order of a number corresponding to a polynomial expression of the number of the predetermined events.

Thereby, it can be numerically determined how large a number of proposition pairs should be produced in order to obtain a desired numerical reliability with which the apparatus gives a conclusion that one of a proposition pair is probable. Thus, plausibility of the qualitative probabilistic inference is improved.

Further, the present invention is not limited to the above-described embodiments, and variations and modifications may be made without departing from the scope of the present invention.

**Claims**

1. A proposition probability determining method for determining a probability of a given proposition, comprising steps of:

    a) producing a number of proposition pairs (in S1-1);
    b) selecting a probable proposition from each of thus-produced proposition pairs (in S1-2);
    c) setting a condition corresponding to a result of each selection performed in said step b), each condition thus being set including a common variable factor (in S1-3); and
    d) fixing said common variable factor such that all conditions set in said step c) are fulfilled at the same time (in S1-4).

2. The proposition probability determining method according to claim 1, further comprising a step of e) determining a number (S1-5), which number is said number of proposition pairs produced in said step a),
said number being determined according to a desired reliability of said common variable factor which is fixed in said step d).

3. The proposition probability determining method according to claim 1, wherein each proposition is a combination of truth/falsity for predetermined events.

4. The proposition probability determining method according to claim 3, wherein:
in said step a), each proposition of each proposition pair being produced is represented by a vector 'x' having elements of truth symbols '1'/falsity symbols '0', which are determined for said predetermined events respectively, and each proposition pair is represented by $(x_{k1}, x_{k2})$;
if said step b) selects said vector $x_{k1}$ as the probable proposition, said step c) sets an inequality

$$w \cdot x_{k1} \leqq w \cdot x_{k2},$$

and if said step b) selects said vector $x_{k2}$ as the probable proposition, said step c) sets an inequality

$$w \cdot x_{k2} \leqq w \cdot x_{k1} + 1,$$

where '$\cdot$' represents an inner-product operation and 'w' is a variable vector; and
said step d) obtains said variable vector w such that all inequalities set in said step c) for all the proposition pairs are fulfilled, thus-obtained variable vector w being then used for determining a probability of a proposition of a given combination of said predetermined events.

5. The proposition probability determining method according to claim 2, wherein said step c) sets said number equal to or more than

$$\max[\frac{4}{e}\log_2\frac{2}{\delta}, \frac{8(n+1)}{e}\log_2\frac{13}{e}],$$

where a number of said predetermined events is 'n', a given error ratio is 'e' and a probability that an actual error ratio is equal to or more than 'e' is '$\delta$'.

6. A proposition probability determining apparatus for determining a probability of a given proposition, comprising:
producing means (23) for producing a number of proposition pairs;
selecting means (24) for selecting a probable proposition from each of thus-produced proposition pairs;
setting means (25) for setting a condition corresponding to a result of each selection performed by said selecting means, each condition thus being set including a common variable factor; and
fixing means (26) for fixing said common variable factor such that all conditions set in said setting means are fulfilled at the same time.

7. The proposition probability determining apparatus according to claim 6, further comprising determining means (23) for determining a number, which number is said number of proposition pairs produced by said producing means,
said number being determined according to a desired reliability of said common variable factor which is fixed by said fixing means.

8. A probabilistic inference apparatus, comprising:
means (17) for inputting truth/falsity for each event of a predetermined number of events, a proposition being represented by a combination of thus-input truth/falsity determined for said predetermined number of events respectively; and
means (13) for performing a probabilistic inference operation so as to obtain a probability of said proposition, using a factor previously set for each event of said predetermined number of events.

9. A probabilistic inference apparatus, comprising:
producing means (23) for producing a number of proposition pairs;
selecting means (24) for selecting a probable proposition from each of thus-produced proposition pairs;
setting means (25) for setting a condition corresponding to a result of each selection performed by said selecting means, each condition thus being set including factors;
fixing means (26) for fixing said factors such that all conditions set in said setting means are fulfilled at the same time; and

means (20, 21) for performing said probabilistic inference operation using said factors fixed by said fixing means.

10. The probabilistic inference apparatus according to claim 9, further comprising determining means (22) for determining a number, which number is said number of proposition pairs produced by said producing means, said number being determined according to a desired reliability of said factors which are fixed by said fixing means.

# F I G . 1

# F I G . 2

# FIG. 3

EP 0 738 963 A1

# F I G. 4

EP 0 738 963 A1

# FIG. 5

```
                          START

S2-1  ┌─────────────────┐  NO
      │  INFERENCE MODE ?├──────────────────┐
      └────────┬────────┘                   │
S2-4       YES │                  S2-2  ┌──────────────┐  NO
      ┌────────▼────────┐               │  KNOWLEDGE   ├──────────┐
      │ CAUSE INFERENCE │               │  ACQUIRING   │          │
      │ UNIT TO OPERATE │               │  MODE ?      │          │
      └────────┬────────┘               └──────┬───────┘          │
S2-5           │                  S2-13    YES │                  │
      ┌────────▼────────┐               ┌──────▼────────┐         │
      │ REQUEST         │               │ CAUSE         │         │
      │ INFORMATION     │               │ KNOWLEDGE     │         │
      │ INPUT           │               │ ACQUIRING     │         │
      └────────┬────────┘               │ MODULE TO     │         │
S2-6           │                        │ OPERATE       │         │
  NO  ┌────────▼────────┐               └──────┬────────┘         │
 ┌────┤ INFORMATION     │          S2-14       │                  │
 │    │ INPUT ?         │               ┌──────▼────────┐         │
 │    └────────┬────────┘               │ REQUEST       │         │
S2-7       YES │                        │ KNOWLEDGE     │         │
 │    ┌────────▼────────┐               │ INPUT         │         │
 │    │ SUPPLY          │               └──────┬────────┘         │
 │    │ INFORMATION TO  │          S2-15       │                  │
 │    │ INFERENCE UNIT  │               ┌──────▼────────┐  NO      │
 │    └────────┬────────┘               │ KNOWLEDGE     ├────┐     │
S2-8           │                        │ INPUT ?       │    │     │
  NO  ┌────────▼────────┐               └──────┬────────┘    │     │
 ┌────┤ INFERENCE       │          S2-16   YES │   S2-3 ┌────▼─────────┐ NO
 │    │ FINISHED ?      │               ┌──────▼──────┐ │ PROBABILITY  ├──┐
 │    └────────┬────────┘               │ SUPPLY INPUT│ │ SETTING MODE │  │
S2-9       YES │                        │ KNOWLEDGE TO│ │ ?            │  │
 │    ┌────────▼────────┐               │ KNOWLEDGE   │ └──────┬───────┘  │
 │    │ DISPLAY         │               │ ACQUIRING   │     YES │         │
 │    │ INFERENCE       │               │ MODULE      │         │         │
 │    │ CONCLUSION      │               └──────┬──────┘ S2-17   │         │
 │    └────────┬────────┘                      │         ┌──────▼──────┐  │
S2-10          │                               │         │ PROBABILITY │  │
  NO  ┌────────▼────────┐                       │         │ SETTING     │  │
 ┌────┤ REASONING       │                       │         │ PROCESS     │  │
 │    │ PROCESS         │                       │         └──────┬──────┘  │
 │    │ EXPLANATION     │                       │                │         │
 │    │ REQUESTED ?     │                       │                │         │
 │    └────────┬────────┘                       │                │         │
 │         YES │                                │                │         │
 │    ┌────────▼────────┐ S2-11                 │                │         │
 │    │ OPERATE         │                       │                │         │
 │    │ REASONING       │                       │                │         │
 │    │ EXPLAINING      │                       │                │         │
 │    │ MODULE          │                       │                │         │
 │    └────────┬────────┘ S2-12                 │                │         │
 │    ┌────────▼────────┐                       │                │         │
 │    │ DISPLAY         │                       │                │         │
 │    │ REASONING       │                       │                │         │
 │    │ PROCESS         │                       │                │         │
 │    │ EXPLANATION     │                       │                │         │
 │    └────────┬────────┘                       │                │         │
 └────────────►│◄─────────────────────────────┘◄───────────────┘         │
              END
```

# FIG. 6

European Patent
Office

**EUROPEAN SEARCH REPORT**

Application Number

EP 95 11 8546

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | PROCEEDINGS OF THE ASILOMAR CONFERENCE ON SIGNALS, SYSTEMS AND COMPUTERS, PACIFIC GROVE, OCT. 31 - NOV. 2, 1988 TWO VOLUMES BOUND AS ONE, vol. 1 OF 2, 31 October 1988 CHEN R R, pages 681-689, XP 000130338 O'HAGAN M 'AGGREGATING TEMPLATE OR RULE ANTECEDENTS IN REAL-TIME EXPERT SYSTEMS WITH FUZZY SET LOGIC' * abstract * | 1,6,9 | G06F9/44 |
| Y | EUROPEAN JOURNAL OF OPERATIONAL RESEARCH, OCT. 1987, NETHERLANDS, vol. 32, no. 1, ISSN 0377-2217, pages 107-117, SAATY T L ET AL 'Uncertainty and rank order in the analytic hierarchy process' * page 107, left column, line 1 - page 109, left column, line 22 * | 1,6,9 | |
| X | IECON87 , 1987 INTERNATIONAL CONFERENCE ON INDUSTRIAL ELECTRONICS, CONTROL, AND INSTRUMENTATION, vol. 2 OF 2, 3 November 1987 CAMBRIDGE, USA, pages 802-809, XP 000039815 PEPER G L ET AL 'INEXACT REASONING IN EXPERT SYSTEMS' | 8 | TECHNICAL FIELDS SEARCHED (Int.Cl.6) G06F |
| A | * the whole document * | 1,6,9 | |
| A | IEEE TRANSACTIONS ON PATTERN ANALYSIS AND MACHINE INTELLIGENCE, vol. 12, no. 3, 1 March 1990 pages 294-308, XP 000102999 CONSTANT P ET AL 'LEW: LEARNING BY WATCHING' * abstract * | 1,6,8,9 | |

-/--

The present search report has been drawn up for all claims

| Place of search | Date of completion of the search | Examiner |
|---|---|---|
| THE HAGUE | 12 April 1996 | Schenkels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)

**European Patent Office**

## EUROPEAN SEARCH REPORT

Application Number

EP 95 11 8546

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PROCEEDINGS OF THE FIFTH ANNUAL IEEE SYMPOSIUM ON COMPUTER BASED MEDICAL SYSTEMS, DURHAM, USA JUNE 14 - 17, 1992, INSTITUTE OF ELECTRICAL AND ELECTRONICS ENGINEERS, pages 572-581, XP 000308331 CHAN K C C ET AL 'A PROBABILISTIC INDUCTIVE LEARNING APPROACH TO THE ACQUISITION OF KNOWLEDGE IN MEDICAL EXPERT SYSTEMS' * abstract * ----- | 1,6,8,9 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 12 April 1996 | Schenkels, P |

EPO FORM 1503 03.82 (P04C01)